# EUROPÄISCHE PATENTSCHRIFT

(11) **EP 4 100 611 B1**
(45) Veröffentlichungstag und Bekanntmachung des Hinweises auf die Patenterteilung: **27.09.2023**
(21) Anmeldenummer: 21726561.0
(22) Anmeldetag: 28.04.2021
(51) Int. Cl.: E21B 7/04, E02F 5/10, E21B 7/20, E21B 7/26, F16L 1/026

(54) **VORRICHTUNG ZUM VERLEGEN VON ROHREN IM BODEN**
DEVICE FOR LAYING PIPES IN THE GROUND
DISPOSITIF DE POSE DE TUYAUX DANS LE SOL

(43) Veröffentlichungstag der Anmeldung: 14.12.2022
(73) Patentinhaber: Spiderplow Rohr- & Kabelpflug GmbH, 84453 Mühldorf am Inn (DE)
(72) Erfinder: HARITZER, Dominik, 9844 Heiligenblut (AT)
(74) Vertreter: KLIMENT & HENHAPEL
(86) Internationale Anmeldenummer: PCT/EP2021/061201
(87) Internationale Veröffentlichungsnummer: WO 2022/228670

(56) Entgegenhaltungen:
- EP-A1- 1 063 458
- EP-A1- 1 167 681
- DE-A1- 19 928 682
- DE-A1-102009 031 028
- DE-C1- 19 928 684
- DE-U1-202016 106 630

## Beschreibung

### GEBIET DER ERFINDUNG

Die vorliegende Erfindung betrifft eine Vorrichtung zum Verlegen von Rohren im Boden, wobei die Vorrichtung ein Pflugschwert mit einem Schwertschuh umfasst, wobei der Schwertschuh zumindest ein in eine Verlegerichtung abstehendes Verdrängungselement aufweist.

### STAND DER TECHNIK

Für die Verlegung von Rohren, die beispielsweise aus Stahl oder Kunststoff gefertigt sein können, sind derzeit mehrere Verlegemethoden bekannt:
Während flexible Rohre auf vergleichsweise einfache Art und Weise mittels eines Pfluges in den Boden eingezogen werden können, kommt bei starren Leitungen ein an den Pflug angehängter "Torpedo" zum Einsatz, dessen Aufgabe darin besteht, durch Verdrängung von Erdreich einen Tunnel zu erzeugen, in dem das zu verlegende Rohr nachgezogen werden kann. Dabei ist der Durchmesser des Torpedos größer als der Durchmesser des zu verlegenden Rohres, welches im Inneren des Torpedos lösbar befestigt ist.

Durch dieses Torpedo-Verfahren wird Erdreich zu allen Seiten hin, insbesondere in Richtung der Erdoberfläche, verdrängt, wobei die Menge des zu verdrängenden Erdreichs proportional dem Durchmesser des verwendeten Torpedos ist - je größer der Durchmesser des zu verlegenden Rohres, desto mehr Erdreich muss also schlussendlich auch verdrängt werden.

Insbesondere bei größeren Rohrdurchmessern kommt es daher zu einer starken Lockerung des Erdreichs im Bereich des durch den Torpedo erzeugten Tunnels, was dazu führt, dass verdrängtes Erdreich dazu tendiert, wieder schneller auf das durch den Tunnel gezogene Rohr abzurieseln. Dieses kollabierende Erdreich erhöht die Reibung zwischen Tunnelwand und Rohr, wodurch sich die zur Verlegung erforderliche Zugkraft mit zunehmender Trassenlänge rapide erhöht. Daher sind bei größeren Rohrdurchmessern die mit dieser Methode verlegbaren Rohrstränge sehr kurz, da die maximalen Zugkräfte schnell erreicht sind.

Aus den Druckschriften EP 1 063 458 A1, DE 199 28 682 A1 sowie EP 1 167 681 A1 sind jeweils solche herkömmlichen Vorrichtungen bekannt geworden, wobei jeweils ein Pflugschwert mit einem Verdrängerelement mit seitlichen Vorsprüngen dazu dient, durch Verdrängung von Erdreich jeweils in seitlicher Richtung einen Tunnel zu erzeugen, in dem ein zu verlegendes Rohr nachgezogen werden kann.

Aus der Druckschrift DE 20 2016 106 630 U1 ist weiters eine Verlegevorrichtung bekannt geworden, die zur Erdverlegung flexibler Strangmaterialien wie beispielsweise von Kabeln vorgesehen ist. Wobei auch bei dieser Verlegevorrichtung, die für das Verlegen von starren Rohren nicht geeignet ist, das Erdreich bis zur vorgegebenen Verlegetiefe der jeweiligen Strangmaterialien verdrängt werden muss.

Aus den oben dargelegten Gründen sind die maximalen Durchmesser von Rohren, die mittels Pflug verlegt werden können, derzeit mit etwa 630 mm begrenzt.

Um Rohre mit noch größeren Rohrdurchmessern zu verlegen, müssen daher beispielsweise Künetten mittels Baggern oder Fräsen ausgehoben werden, in die anschließend die zu verlegenden Rohre eingelegt werden können. Der große Aufwand, der dabei insbesondere durch das Ausheben und Zuschütten der Künetten entsteht, liegt dabei ebenso auf der Hand wie der mit solchen Verfahren verbundene Platzaufwand (Arbeitsstreifen mit einer Breite von bis zu 36 m sind erforderlich). Alternativ werden auch Bohrverfahren angewandt, bei denen ein Bohrkopf von einem in einem Pilotbohrloch geführten Bohrgestänge in Verlegerichtung gezogen wird; auch hierbei stoßen die maximal möglichen Rohrdurchmesser aus den oben dargelegten Gründen schnell an ihre Grenzen und geht ein erheblicher Aufwand mit der Verwendung des separaten Bohrgestänges einher. Außerdem sind Verfahren bekannt, bei denen ein Bohrkopf mittels des zu verlegenden Rohrs in Verlegerichtung gepresst wird. Hierzu sind einerseits leistungskräftige Pressen erforderlich, die in eigens hierfür konzipierte und verstärkte Gruben eingebaut werden müssen, um das zu verlegende Rohr, an dessen einem Ende der Bohrkopf befestigt ist, Abschnitt für Abschnitt nach vorne zu pressen; andererseits müssen die zu verlegenden Rohrleitungen hierfür starr ausgebildet sein, da die gesamte Vortriebskraft über die Rohrleitung selbst auf den Bohrkopf übertragen werden muss. Nach Erreichen einer bestimmten Distanz zwischen Presse und Bohrkopf muss die Presse ausgebaut und in eine neue Grube versetzt werden, wodurch dieses Verfahren äußerst aufwändig ist.

### AUFGABE DER ERFINDUNG

Es ist daher eine Aufgabe der Erfindung die Nachteile des Standes der Technik zu überwinden und eine Vorrichtung zum Verlegen von Rohren im Boden vorzuschlagen, mittels der auch Rohre mit Durchmessern von mehr als 630 mm auf einfache Art und Weise verlegt werden können.

Weitere Aufgaben können der Beschreibung entnommen werden.

### DARSTELLUNG DER ERFINDUNG

Diese Aufgabe wird erfindungsgemäß durch eine Vorrichtung zum Verlegen von Rohren im Boden gelöst, die Vorrichtung umfassend ein Pflugschwert mit einem Schwertschuh, wobei der Schwertschuh zumindest ein in eine Verlegerichtung abstehendes Verdrängungselement aufweist, sowie weiterhin umfassend einen Bohrer, welcher Bohrer mit dem Pflugschwert verbunden ist und zumindest einen in einem Bohrkopfgehäuseabschnitt eines Bohrergehäuses angeordneten Bohrkopf sowie eine in einem Fördergehäuseabschnitt des Bohrergehäuses angeordnete Fördereinrichtung zur Abförderung von Bohrgut in Form des vom Bohrkopf erfassten Erdreichs an die Erdoberfläche umfasst, sowie eine Anbindungseinrichtung zur Anbindung eines zu verlegenden Rohres an den Bohrer, wobei das Pflugschwert in Verlegerichtung betrachtet hinter dem Bohrer angeordnet ist.

Ähnlich wie bei bekannten Verlegeverfahren, bei denen ein Pflug zum Einsatz kommt, werden Steine und andere im Erdreich befindliche Hindernisse durch das Verdrängungselement und/oder das Pflugschwert verdrängt. Zusätzlich dazu wird Erdreich von dem Bohrer erfasst und abgefördert, um ein Bohrloch für das zu verlegende Rohr herzustellen. Somit ergibt sich gegenüber herkömmlichen Bohrverfahren der Vorteil, dass die besagten Hindernisse nicht durch den Bohrer zerkleinert und abgefördert werden müssen. Da das Pflugschwert in Verlegerichtung hinter dem Bohrer angeordnet ist, ist das Erdreich durch das Pflugschwert und/oder das Verdrängungselement bereits aufgelockert, bevor dieses vom Bohrer erfasst wird, sodass sich der Bohrer unter geringerem Kraftaufwand durch das Erdreich graben kann als bei herkömmlichen Bohrverfahren. Das vom Bohrkopf erfasste Erdreich wird mittels Fördereinrichtung an die Erdoberfläche gefördert, wo das Bohrgut verteilt oder abtransportiert werden kann; ein Zurückrieseln von Erdreich auf das zu verlegende Rohr, welches mittels der Anbindungseinrichtung mit dem Bohrer verbunden ist, ist somit auf zuverlässige Weise unterbunden. Insgesamt lässt sich anhand der erfindungsgemäßen Vorrichtung somit ein Verlegeverfahren realisieren, bei dem starre und flexible Rohre bzw. Leitungen auf einfache Art und Weise verlegt werden können, ohne dass hierfür breite Arbeits- oder Grabstreifen, oder speziell verstärkte Gruben zur Unterbringung von Pressen oder dergleichen notwendig wären. Die erforderliche Vortriebskraft kann dabei über das Pflugschwert auf die Vorrichtung übertragen werden.

Bei einer bevorzugten Ausführungsform der erfindungsgemäßen Vorrichtung ist der Fördergehäuseabschnitt quer zur Verlegerichtung verlaufend angeordnet, um das Bohrgut über Tage zu fördern.

Dadurch wird es möglich, das durch das Verdrängungselement und/oder den Schwertschuh aufgelockerte und vom Bohrer erfasste Bohrgut quer zur Verlegerichtung, in die das Verdrängungselement abragt, abzufördern. Insbesondere kann das Bohrgut so direkt an die Erdoberfläche gefördert werden, sodass das Bohrgut im Bohrloch zu keiner Erhöhung der erforderlichen Zugkräfte mehr führen kann.

Bei einer anderen bevorzugten Ausführungsform der erfindungsgemäßen Vorrichtung ist der Bohrer mittels eines Kopplungselementes mit dem Pflugschwert so verbunden, dass zwischen Kopplungselement und Bohrkopf ein Freiraum verbleibt. Insbesondere ist die Ausdehnung dieses Freiraums durch die konkrete Ausbildung des Kopplungselementes einstellbar.

Somit kann Erdreich, welches durch das Verdrängungselement und/oder durch das Pflugschwert verdrängt und/oder aufgelockert wurde und sich - aufgrund der Bewegung der Vorrichtung - nunmehr in dem Freiraum gesammelt hat, von dem Bohrkopf erfasst und durch die Fördereinrichtung abgefördert werden. Vorzugsweise erstreckt sich dieser Freiraum im gesamten Einzugsbereich des Bohrkopfes, über welchen Einzugsbereich der Bohrkopf Erdreich erfassen kann.

Bevorzugt greift das Kopplungselement zumindest im Bereich des Bohrkopfes, insbesondere des Bohrkopfgehäuseabschnitts, und im Bereich der Fördereinrichtung, insbesondere des Fördergehäuseabschnitts, an den Bohrer an.

Dadurch wird eine besonders stabile Führung des vom Pflugschwert gezogenen Bohrers gewährleistet. Insbesondere führt das an den Bohrkopfgehäuseabschnitt und den Fördergehäuseabschnitt angreifende Kopplungselement dazu, dass von dem Erdreich auf den Fördergehäuseabschnitt übertragene Kräfte, insbesondere Reibungs-, Druck- und Zugkräfte, über das Kopplungselement abgeleitet werden können. Auf diese Weise wird einem strukturellen Versagen des Fördergehäuseabschnitts, auf den im Betriebszustand der Vorrichtung hohe Kräfte wirken, vorgebeugt. Dabei kann das Kopplungselement insbesondere an einer von der Erdoberfläche - und somit auch von dem Fördergehäuseabschnitt - abgewandten Unterseite des Bohrkopfgehäuseabschnitts angelenkt oder starr mit dem Bohrer verbunden sein.

Bei einer anderen bevorzugten Ausführungsform der erfindungsgemäßen Vorrichtung ist der Bohrer horizontal verschwenkbar mit dem Pflugschwert und/oder dem Kopplungselement verbunden.

Dadurch können horizontale Richtungsänderungen durch das Pflugschwert einfach vollzogen werden, ohne dass das zu verlegende Rohr, das über die Anbindungseinrichtung mit der Vorrichtung verbunden ist, insbesondere durch ein starres Rohr, eine der Richtungsänderung entgegengerichtete Kraft auf das Pflugschwert übertragen könnte. Dabei kann entweder das Kopplungselement starr mit dem Bohrer, jedoch verschwenkbar mit dem Pflugschwert verbunden sein; alternativ können Pflugschwert und Kopplungselement starr miteinander verbunden und eine schwenkbare Verbindung zwischen Bohrer und Kopplungselement vorgesehen sein.

Bei einer anderen bevorzugten Ausführungsform der erfindungsgemäßen Vorrichtung ist der Bohrer vertikal verschwenkbar mit dem Pflugschwert und/oder dem Kopplungselement verbunden ist.

Analog zu den oben im Zusammenhang mit der horizontalen Verschwenkbarkeit beschriebenen Vorteilen ergibt sich bei dieser Ausführungsform eine besonders leichtgängige Verschwenkbarkeit der Vorrichtung in der Vertikalen - die erfindungsgemäße Vorrichtung lässt sich dadurch auf besonders einfache und kraftsparende Weise steuern.

Bei einer anderen bevorzugten Ausführungsform der erfindungsgemäßen Vorrichtung ist das Verdrängungselement derart angeordnet, dass bei bestimmungsgemäßer Verwendung der Vorrichtung Erdreich durch das Verdrängungselement verdrängt und/oder aufgelockert wird, bevor es vom Bohrkopf erfasst wird.

Insbesondere kann das Verdrängungselement im Wesentlichen auf selber Höhe mit dem Bohrkopf angeordnet sein.

Durch eine derartige Anordnung reduziert sich die erforderliche Vortriebskraft noch weiter. Besonders bevorzugt wird Erdreich zuerst von dem Verdrängungselement verdrängt und/oder aufgelockert, bevor der Bohrkopf dieses Erdreich erfasst, wenn sich die Vorrichtung während ihres bestimmungsgemäßen Betriebs in Verlegerichtung durch das Erdreich bewegt. Dabei kann das Verdrängungselement bevorzugt innerhalb einer sich in Verlegerichtung erstreckenden Projektion des Bohrkopfes liegen, diese aber besonders bevorzugt nicht vollständig überdecken.

Bei einer anderen bevorzugten Ausführungsform der erfindungsgemäßen Vorrichtung umfasst das Bohrergehäuse einen Aufweitungsgehäuseabschnitt mit gegenüber dem Bohrkopfgehäuseabschitt vergrößertem Querschnitt, wobei der Bohrkopfgehäuseabschitt in Verlegerichtung betrachtet hinter dem Aufweitungsgehäuseabschnitt angeordnet ist, und wobei der Aufweitungsgehäuseabschnitt vorzugsweise unmittelbar an den Bohrkopfgehäuseabschitt anschließt.

Durch den Aufweitungsgehäuseabschnitt des Bohrergehäuses wird eine Innenwand eines durch den Bohrkopf erzeugten Bohrlochs mit Druck beaufschlagt und konsolidiert, wodurch ein Abrieseln von Erdreich auf das zu verlegende Rohr und/oder eine Behinderung der Rohrbewegung durch im Bohrloch befindliche Steine oder andere Hindernisse auf zuverlässige Weise unterbunden wird. Insbesondere dann, wenn der Aufweitungsgehäuseabschnitt unmittelbar an den Bohrkopfgehäuseabschnitt anschließt, kann dadurch eine weitere Reduktion der erforderlichen Vortriebskraft erzielt werden.

Bei einer anderen bevorzugten Ausführungsform der erfindungsgemäßen Vorrichtung ist der Schwertschuh in seiner Orientierung verstellbar am Pflugschwert angeordnet.

Dadurch lassen sich vertikale Richtungsänderungen der Vorrichtung mittels entsprechender Verstellung der Orientierung des Schwertschuhs bewirken. So kann im Betriebszustand der Vorrichtung insbesondere eine Verlegetiefe, in welcher Verlegetiefe das zu verlegende Rohr durch das Erdreich geführt werden soll, eingestellt bzw. verändert werden.

Eine der Erfindung zu Grunde liegende Aufgabe wird darüber hinaus durch ein System gelöst, welches System zumindest ein Verlegefahrzeug sowie die erfindungsgemäße Vorrichtung umfasst, wobei das Pflugschwert der Vorrichtung mit dem Verlegefahrzeug verbunden oder Bestandteil des Verlegefahrzeuges ist.

Bei dem Verlegefahrzeug kann es sich beispielsweise um einen Pflug handeln, wie er auch bei den eingangs beschriebenen Verlegeverfahren nach dem Stand der Technik verwendet wird. Dieser Pflug kann vorzugsweise lösbar mit dem Pflugschwert verbunden sein, oder das Pflugschwert kann Bestandteil des Pfluges sein. Der Pflug kann entweder selbst die erforderliche Vortriebskraft aufbringen, um die erfindungsgemäße Vorrichtung durch das Erdreich zu ziehen, und/oder es können ein oder mehrere Zugfahrzeuge vorgesehen sein, die den Pflug ziehen. Zudem kann das Verlegefahrzeug Mittel umfassen, um das aus dem Bohrloch zu Tage geförderte Bohrgut aufzubewahren, zu verteilen oder an andere Fahrzeuge weiterzuleiten.

Bei einer anderen bevorzugten Ausführungsform der erfindungsgemäßen Vorrichtung weist das Verlegefahrzeug eine Steuerungseinrichtung zur Steuerung zumindest der Orientierung des Schwertschuhs und/oder einer Drehgeschwindigkeit des Bohrkopfes und/oder einer Fördergeschwindigkeit der Fördereinrichtung auf.

Dadurch sind zur Steuerung der erfindungsgemäßen Vorrichtung keine zusätzlichen Einrichtungen, insbesondere keine Steuerungsfahrzeuge, erforderlich.

Bevorzugt ist die Steuerungseinrichtung über im Pflugschwert verlaufende Steuerungsmittel mit dem Schwertschuh und/oder dem Bohrkopf und/oder der Fördereinrichtung verbunden.

So können die beispielsweise als Hydraulikleitungen ausgebildeten Steuerungsmittel optimal vor äußeren Krafteinwirkungen bzw. Beschädigungen geschützt werden; außerdem ist durch Anordnung entsprechender Anschlüsse im Pflugschwert eine einfache und zuverlässige Herstellung einer Wirkverbindung mit entsprechenden Steuerungseinrichtungen möglich. Insgesamt kann dadurch auf besonders einfache Weise eine zuverlässige Steuerung der erfindungsgemäßen Vorrichtung gewährleistet werden.

Eine der Erfindung zu Grunde liegende Aufgabe wird auch gelöst durch ein Verfahren zum Verlegen eines Rohres im Boden zwischen einer Anfangsposition und einer Endposition entlang einer Verlegerichtung unter Einsatz des zuvor beschriebenen Systems, wobei das Verfahren zumindest die folgenden Verfahrensschritte umfasst:
- Anbinden des zu verlegenden Rohres an die Anbindungseinrichtung der Vorrichtung, bevor die Vorrichtung die Anfangsposition erreicht hat oder wenn sich die Vorrichtung in der Anfangsposition befindet;
- Bewegen, insbesondere Ziehen, des Verlegefahrzeuges in Verlegerichtung bei gleichzeitigem Betreiben des Bohrkopfes und der Fördereinrichtung;
- Lösen des Rohres von der Anbindungseinrichtung, nachdem die Vorrichtung die Endposition erreicht hat.

Dabei kann das zu verlegende Rohr insbesondere noch über Tage, d.h. an der Erdoberfläche, mit der erfindungsgemäßen Vorrichtung verbunden werden. Durch Bewegen des Verlegefahrzeuges in jene Richtung, entlang der das Rohr zwischen der Anfangs- und der Endposition im Boden verlegt werden soll, also in die Verlegerichtung, beginnt sich der entsprechend eingestellte Schwertschuh in das Erdreich einzugraben, wodurch das Pflugschwert, der am Pflugschwert befestigte Bohrer und das mit dem Bohrer verbundene Rohr zumindest abschnittsweise unter die Erdoberfläche gelangen. Nach Erreichen einer gewünschten Verlegetiefe kann der Schwertschuh, etwa mittels der Steuerungseinrichtung des Verlegefahrzeuges, so eingestellt bzw. gesteuert werden, dass die Verlegetiefe gehalten wird. Während sich das Verlegefahrzeug an der Erdoberfläche in Verlegerichtung bewegt, werden sowohl der Bohrkopf als auch die Fördereinrichtung betrieben, wodurch Erdreich, das durch das Verdrängungselement und/oder den Schwertschuh und/oder das Pflugschwert verdrängt bzw. aufgelockert wurde, vom Bohrkopf erfasst und durch die Fördereinrichtung abgefördert wird, sodass sich ein Bohrloch ausbildet, in welches Bohrloch das mit der Vorrichtung verbundene Rohr eingezogen werden kann, ohne dass das Erdreich eine allzu große Reibkraft auf das Rohr ausübt. Insbesondere vorteilhaft ist dabei, wenn das Bohrergehäuse einen zwischen Bohrkopfgehäuseabschnitt und Bohrer angeordneten Aufweitungsgehäuseabschnitt aufweist, dessen Durchmesser sowohl größer als jener des zu verlegenden Rohrs als auch größer als der Durchmesser des Bohrkopfes ist. Das eine Innenwand des Bohrloches ausbildende Erdmaterial wird durch den Aufweitungsgehäuseabschnitt verdrängt bzw. verdichtet, sodass die Innenwand des Bohrlochs stabilisiert und gegen Einsturz gesichert wird. Zur Stabilisierung des Bohrlochs kann darüber hinaus auch Bentonit oder Wasser verwendet werden, welches ebenfalls durch die erfindungsgemäße Vorrichtung in das Bohrloch eingebracht werden kann. Nach Erreichen der Endposition kann das verlegte Rohr von der Vorrichtung gelöst und ggf. mit anderen Rohren bzw. Anschlüssen verbunden, vorzugsweise verschweißt, werden.

### KURZE BESCHREIBUNG DER FIGUREN

Die Erfindung wird nun anhand eines (von) Ausführungsbeispiels(en) näher erläutert. Die Zeichnungen sind beispielhaft und sollen den Erfindungsgedanken zwar darlegen, ihn aber keinesfalls einengen oder gar abschließend wiedergeben.

### Dabei zeigt:

- Fig. 1: die erfindungsgemäße Vorrichtung in einer Seitenansicht (schematische Darstellung)
- Fig. 2: die Vorrichtung aus Fig. 1 in axonometrischer Ansicht
- Fig. 3: eine schematische Darstellung der mit einem Verlegefahrzeug verbundenen Vorrichtung

### WEGE ZUR AUSFÜHRUNG DER ERFINDUNG

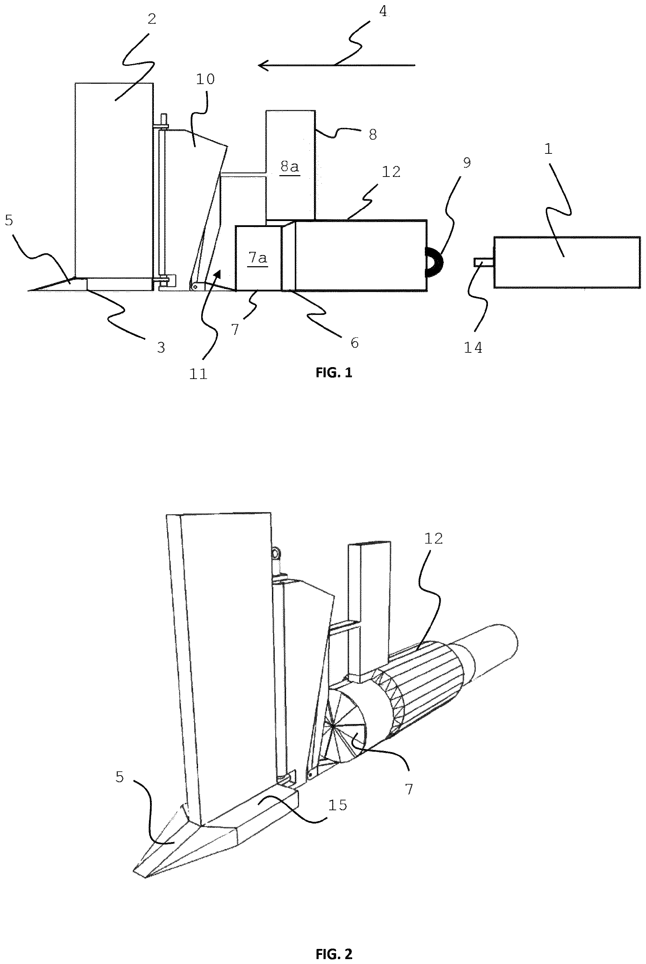

Aus den Fig. 1 und 2 ist der Aufbau der erfindungsgemäßen Vorrichtung in einer beispielhaften Ausführungsform ersichtlich.

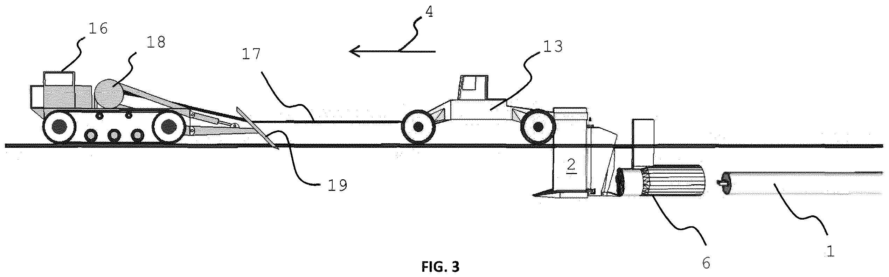

Die Vorrichtung selbst umfasst dabei zunächst ein Pflugschwert 2, an dessen unterem Ende ein Schwertschuh 3 angeordnet ist. Dieser Schwertschuh 3 ist beweglich, insbesondere kippbar, am Pflugschwert 2 gehalten und ermöglicht die Einstellung bzw. Veränderung einer Verlegetiefe, in welcher Verlegetiefe ein zu verlegendes Rohr 1 im Boden verlegt werden soll. Das Pflugschwert 2 kann mit einem Verlegefahrzeug 13 (siehe Fig. 3), etwa einem Pflug, verbunden oder einstückig mit diesem ausgebildet sein.

Neben zwei flächig ausgebildeten, tragflächenartigen Abschnitten 15, die sich zu beiden Seiten des Pflugschwertes 2 und vorzugsweise orthogonal zu diesem erstrecken, weist der Schwertschuh 3 auch ein Verdrängungselement 5 auf, welches Verdrängungselement 5 in Verlegerichtung 4 von dem Pflugschwert 2 abragt. Dieses Verdrängungselement 5 kann ein oder mehrere keilförmig ausgebildete Fortsätze umfassen, die sich mit zunehmendem Abstand vom Pflugschwert 2 verjüngen. Insbesondere kann sowohl die Breite als auch die Höhe des oder der keilförmigen Fortsätze in Verlegerichtung 4 abnehmen.

Vorzugsweise ist der Schwertschuh 3 um einen im Kontaktbereich von Verdrängungselement 5 und tragflächenartigen Abschnitten 15 liegenden Punkt drehbar an dem Pflugschwert 2 befestigt, wobei das dem Verdrängungselement 5 abgewandte Ende der tragflächenartigen Abschnitte 15 mittels eines (nicht dargestellten) Betätigungselementes verstellbar ist.

Wird das Pflugschwert 2 nun - etwa mittels des Verlegefahrzeuges - in horizontaler Richtung bewegt, so lässt sich die Vertikallage des Schwertschuhs 3 relativ zur Erdoberfläche, also die Verlegetiefe, durch entsprechende Wahl der Stellung des Schwertschuhs 3 einstellen bzw. verändern: Befindet sich der Schwertschuh 3 in jener Stellung, die in Fig. 1 und 2 gezeigt ist, wird sich die Verlegetiefe bei horizontaler Bewegung nicht wesentlich verändern; wenn jedoch das Verdrängungselement 5 in Richtung der Bodenoberfläche weist (sodass die tragflächenartigen Abschnitte 15 des Schwertschuhs 3 in die entgegengesetzte Richtung weisen), wird sich der Schwertschuh 3 im Zuge der Horizontalbewegung der Vorrichtung in Richtung der Erdoberfläche bewegen; analog dazu wird die Verlegetiefe zunehmen, wenn die tragflächenartigen Abschnitte 15 zur Erdoberfläche hin weisen.

Erdreich, das sich vor dem Schwertschuh 2 befindet, wird durch die Bewegung der Vorrichtung vom Verdrängungselement 5 und/oder dem Schwertschuh 3 und/oder dem Pflugschwert 2 erfasst und aufgelockert; Hindernisse im Erdreich, etwa Steine und dergleichen, werden in höher oder tiefer gelegene, oder in seitliche Erdschichten verdrängt. Anschließend wird das aufgelockerte Erdreich von einem Bohrkopf 7 eines mittels eines Kopplungselementes 10 mit dem Pflugschwert 2 verbundenen Bohrers 6 erfasst und über eine Fördereinrichtung 8 abgefördert, sodass sich ein Bohrloch für das zu verlegende Rohr 1 ausbildet. Hierzu ist das Pflugschwert 2 in Verlegerichtung betrachtet hinter dem Bohrer 6 angeordnet; dies entspricht der in Fig. 1 und 2 dargestellten Abfolge.

Dabei ist der Bohrkopf 7 in einem Bohrkopfgehäuseabschnitt 7a des Bohrers 6 und die Fördereinrichtung 8 in einem Fördergehäuseabschnitt 8a des Bohrers 6 untergebracht. Wie in Fig. 1 und 2 gezeigt, kann das Kopplungselement 10 horizontal verschwenkbar mit dem Pflugschwert 2 und vertikal verschwenkbar mit dem Bohrer 6 verbunden sein. Dabei kann das Kopplungselement 10 im Bereich des Bohrkopfgehäuseabschnitts 7a und im Bereich des Fördergehäuseabschnitts 8a an den Bohrer angreifen. Somit ergibt sich zwischen Kopplungselement 10 und Bohrkopf 7 ein Freiraum 11, in welchem Freiraum 11 sich Erdreich, das durch das Verdrängungselement 5 und/oder den Schwertschuh 3 und/oder das Pflugschwert 2 aufgelockert und/oder verdrängt wurde, sammeln und anschließend vom Bohrkopf 7 erfasst werden kann.

Durch einen Aufweitungsgehäuseabschnitt 12 des Bohrers 6, welcher Aufweitungsgehäuseabschnitt 12 zwischen dem Bohrkopfgehäuseabschnitt 7a und einer am Bohrer 6 vorgesehenen Anbindungseinrichtung 9 zur Anbindung des zu verlegenden Rohrs 1 an die Vorrichtung vorgesehen ist, wird die Innenwand des durch den Bohrkopf 7 erzeugten Bohrlochs konsolidiert und gegen Einsturz gesichert. Hierzu weist der Bohrer 6 im Aufweitungsgehäuseabschnitt 12 einen größeren Durchmesser auf als im Bohrkopfgehäuseabschnitt 7a. Besonders bevorzugt geht der Bohrkopfgehäuseabschnitt 7a im Bereich einer Durchmessererweiterung des Bohrers 6 direkt in den Aufweitungsgehäuseabschnitt 12 über, wie dies in Fig. 1 und 2 gezeigt ist.

Folglich wird mittels der erfindungsgemäßen Vorrichtung das aus dem Stand der Technik bekannte Problem von auf das zu verlegende Rohr 1 herabfallendem Erdreich und der damit einhergehenden Erhöhung der auf das Rohr 1 wirkenden Reibkräfte gelöst; das mittels der Anbindungseinrichtung 9 mit der Vorrichtung verbundene Rohr 1, das zu diesem Zweck ebenfalls eine Kupplung 14 zur Herstellung eines Formschlusses mit der Anbindungseinrichtung 9 aufweisen kann, wird durch die Bewegung der Vorrichtung direkt in das stabilisierte Bohrloch eingezogen, welches frei von größeren Steinen oder anderen Hindernissen - diese wurden zuvor durch das Verdrängungselement 5 verdrängt und ggf. durch den Aufweitungsgehäuseabschnitt 12 fest in die Innenwand des Bohrlochs gedrückt - sowie von aufgelockertem Erdreich ist, da dieses mittels der im Bohrer 6 vorgesehenen Fördereinrichtung 8, unmittelbar nachdem es vom Bohrkopf 7 erfasst wurde, abgefördert, insbesondere an die Erdoberfläche gefördert wurde.

Wie aus Fig. 3 ersichtlich ist, wird das Verlegefahrzeug 13 selbst von einer Windenraupe 16 in Verlegerichtung 4 gezogen. Dabei ist die Windenraupe 16 mit einer Seilwinde 18 und einem Ankerspaten 19 ausgestattet und in einigem Abstand, beispielsweise 110 Meter vor dem Verlegefahrzeug 13 angeordnet. Über ein oder mehrere Stahlseile 17 ist die Windenraupe 16 mit dem Verlegefahrzeug 13 verbunden. Im Betriebszustand wird der Ankerspaten 19 in den Boden abgesenkt, um einen stabilen Stand der Windenraupe 16 zu gewährleisten, bevor die Seilwinde betätigt wird, um die Stahlseile 17 in Verlegerichtung 4 einzuholen.

### BEZUGSZEICHENLISTE

- 1: Rohr
- 2: Pflugschwert
- 3: Schwertschuh
- 4: Verlegerichtung
- 5: Verdrängungselement
- 6: Bohrer
- 7: Bohrkopf
- 7a: Bohrkopfgehäuseabschnitt
- 8: Fördereinrichtung
- 8a: Fördergehäuseabschnitt
- 9: Anbindungseinrichtung
- 10: Kopplungselement
- 11: Freiraum
- 12: Aufweitungsgehäuseabschnitt
- 13: Verlegefahrzeug
- 14: Kupplung des Rohres
- 15: tragflächenartige Abschnitte
- 16: Windenraupe
- 17: Stahlseil
- 18: Seilwinde
- 19: Ankerspaten

## Patentansprüche

1. Vorrichtung zum Verlegen von Rohren (1) im Boden, die Vorrichtung umfassend
- ein Pflugschwert (2) mit einem Schwertschuh (3), wobei der Schwertschuh (3) zumindest ein in eine Verlegerichtung (4) abstehendes Verdrängungselement (5) aufweist,
- einen Bohrer (6), welcher Bohrer (6) mit dem Pflugschwert (2) verbunden ist und zumindest einen in einem Bohrkopfgehäuseabschnitt (7a) eines Bohrergehäuses angeordneten Bohrkopf (7) sowie eine in einem Fördergehäuseabschnitt (8a) des Bohrergehäuses angeordnete Fördereinrichtung (8) zur Abförderung von Bohrgut in Form des vom Bohrkopf (7) erfassten Erdreichs an die Erdoberfläche umfasst, sowie
- eine Anbindungseinrichtung (9) zur Anbindung eines zu verlegenden Rohres (1) an den Bohrer (6), wobei
- das Pflugschwert (2) in Verlegerichtung (4) betrachtet hinter dem Bohrer (6) angeordnet ist.

2. Vorrichtung nach Anspruch 1, **dadurch gekennzeichnet, dass** der Fördergehäuseabschnitt (8a) quer zur Verlegerichtung (4) verlaufend angeordnet ist, um das Bohrgut über Tage zu fördern.

3. Vorrichtung nach Anspruch 1 oder 2, **dadurch gekennzeichnet, dass** der Bohrer (6) mittels eines Kopplungselementes (10) mit dem Pflugschwert (2) so verbunden ist, sodass zwischen Kopplungselement (10) und Bohrkopf (7) ein Freiraum (11) verbleibt.

4. Vorrichtung nach Anspruch 3, **dadurch gekennzeichnet, dass** das Kopplungselement (10) zumindest im Bereich des Bohrkopfes (7), insbesondere des Bohrkopfgehäuseabschnitts (7a), und im Bereich der Fördereinrichtung (8), insbesondere des Fördergehäuseabschnitts (8a), an den Bohrer (6) angreift.

5. Vorrichtung nach einem der Ansprüche 1 bis 4, **dadurch gekennzeichnet, dass** der Bohrer (6) horizontal verschwenkbar mit dem Pflugschwert (2) und/oder dem Kopplungselement (10) verbunden ist.

6. Vorrichtung nach einem der Ansprüche 1 bis 5, **dadurch gekennzeichnet, dass** der Bohrer (6) vertikal verschwenkbar mit dem Pflugschwert (2) und/oder dem Kopplungselement (10) verbunden ist.

7. Vorrichtung nach einem der Ansprüche 1 bis 6, **dadurch gekennzeichnet, dass** das Verdrängungselement (5) derart angeordnet ist, dass bei bestimmungsgemäßer Verwendung der Vorrichtung Erdreich verdrängt und/oder aufgelockert wird, bevor es vom Bohrkopf (7) erfasst wird.

8. Vorrichtung nach einem der Ansprüche 1 bis 7, **dadurch gekennzeichnet, dass** das Verdrängungselement (5) im Wesentlichen auf selber Höhe mit dem Bohrkopf (7) angeordnet ist.

9. Vorrichtung nach einem der Ansprüche 1 bis 8, **dadurch gekennzeichnet, dass** das Bohrergehäuse einen Aufweitungsgehäuseabschnitt (12) mit gegenüber dem Bohrkopfgehäuseabschitt (7a) vergrößertem Querschnitt umfasst, wobei der Bohrkopfgehäuseabschitt (7a) in Verlegerichtung (4) betrachtet hinter dem Aufweitungsgehäuseabschnitt (12) angeordnet ist, wobei der Aufweitungsgehäuseabschnitt (12) vorzugsweise unmittelbar an den Bohrkopfgehäuseabschitt (7a) anschließt.

10. Vorrichtung nach Anspruch 9, **dadurch gekennzeichnet, dass** die Anbindungseinrichtung (9) innerhalb des Aufweitungsgehäuseabschnittes (12) oder an einem vom Bohrkopf (7) abgewandten Endbereich des Aufweitungsgehäuseabschnittes (12) angeordnet ist.

11. Vorrichtung nach einem der Ansprüche 1 bis 10, **dadurch gekennzeichnet, dass** der Schwertschuh (3) in seiner Orientierung verstellbar am Pflugschwert (2) gehalten ist.

12. System umfassend ein Verlegefahrzeug (13) sowie eine Vorrichtung nach einem der Ansprüche 1 bis 11, wobei das Pflugschwert (2) der Vorrichtung mit dem Verlegefahrzeug (13) verbunden oder Bestandteil des Verlegefahrzeuges (13) ist.

13. System nach Anspruch 12, **dadurch gekennzeichnet, dass** das Verlegefahrzeug (13) eine Steuerungseinrichtung zur Steuerung zumindest der Orientierung des Schwertschuhs (3) und/oder einer Drehgeschwindigkeit des Bohrkopfes (7) und/oder einer Fördergeschwindigkeit der Fördereinrichtung (8) aufweist.

14. System nach Anspruch 13, **dadurch gekennzeichnet, dass** die Steuerungseinrichtung über im Pflugschwert (2) verlaufende Steuerungsmittel mit dem Schwertschuh (3) und/oder dem Bohrkopf (7) und/oder der Fördereinrichtung (8) verbunden ist.

15. Verfahren zum Verlegen eines Rohres (1) im Boden zwischen einer Anfangsposition und einer Endposition mittels eines Systems nach einem der Ansprüche 12 bis 14, umfassend die folgenden Verfahrensschritte:
- Anbinden des zu verlegenden Rohres (1) an die Anbindungseinrichtung (9) der Vorrichtung, bevor die Vorrichtung die Anfangsposition erreicht hat oder wenn sich die Vorrichtung in der Anfangsposition befindet;
- Ziehen des Verlegefahrzeuges (13) in Verlegerichtung (4) bei gleichzeitigem Betreiben des Bohrkopfes (7) und der Fördereinrichtung (8);
- Lösen des Rohres (1) von der Anbindungseinrichtung (9), nachdem die Vorrichtung die Endposition erreicht hat.

## Claims

1. Device for laying pipes (1) in the ground, the device comprising
- a ploughshare (2) with a ploughshare shoe (3), wherein the ploughshare shoe (3) has at least one displacement element (5) protruding in a laying direction (4),
- a drill (6), which drill (6) is connected to the ploughshare (2) and comprises at least one drill head (7) arranged in a drill head housing section (7a) of a drill housing and a conveyor device (8) arranged in a conveyor housing section (8a) of the drill housing for removing drilled material in the form of soil grasped by the drill head (7) to the earth surface, and
- a connection device (9) for connecting a pipe (1) to be laid to the drill (6), wherein
- the ploughshare (2) is arranged behind the drill (6) when viewed in the laying direction (4).

2. Device according to Claim 1, **characterized in that** the conveyor housing section (8a) is arranged to run transversely to the laying direction (4) in order to convey the drilled material above ground.

3. Device according to Claim 1 or 2, **characterized in that** the drill (6) is connected to the ploughshare (2) by means of a coupling element (10) so that a free space (11) remains between the coupling element (10) and the drill head (7).

4. Device according to Claim 3, **characterized in that** the coupling element (10) acts on the drill (6) at least in the area of the drill head (7), in particular the drill head housing section (7a), and in the area of the conveyor device (8), in particular of the conveyor housing section (8a).

5. Device according to one of Claims 1 to 4, **characterized in that** the drill (6) is connected to the ploughshare (2) and/or the coupling element (10) so that it can be pivoted horizontally.

6. Device according to one of Claims 1 to 5, **characterized in that** the drill (6) is connected to the ploughshare (2) and/or the coupling element (10) so that it can be pivoted vertically.

7. Device according to one of Claims 1 to 6, **characterized in that** the displacement element (5) is arranged in such a manner that when the device is used as intended, soil is displaced and/or loosened before it is gripped by the drill head (7).

8. Device according to one of Claims 1 to 7, **characterized in that** the displacement element (5) is arranged substantially at the same height as the drill head (7).

9. Device according to one of Claims 1 to 8, **characterized in that** the drill housing comprises a widened housing section (12) with an enlarged cross-section compared to the drill head housing section (7a), wherein the drill head housing section (7a) is arranged behind the widened housing section (12) when viewed in the laying direction (4), wherein the widened housing section (12) preferably directly adjoins the drill head housing section (7a).

10. Device according to Claim 9, **characterized in that** the connection device (9) is arranged within the widened housing section (12) or on an end region of the widened housing section (12) facing away from the drill head (7).

11. Device according to one of Claims 1 to 10, **characterized in that** the ploughshare shoe (3) is held on the ploughshare (2) so that its orientation can be adjusted.

12. System comprising a laying vehicle (13) and a device according to one of Claims 1 to 11, wherein the ploughshare (2) of the device is connected to the laying vehicle (13) or is part of the laying vehicle (13).

13. System according to Claim 12, **characterized in that** the laying vehicle (13) has a control device for controlling at least the orientation of the ploughshare shoe (3) and/or a rotational speed of the drill head (7) and/or a conveying speed of the conveyor device (8).

14. System according to Claim 13, **characterized in that** the control device is connected to the ploughshare shoe (3) and/or the drill head (7) and/or the conveyor device (8) via control means running in the ploughshare (2).

15. Method for laying a pipe (1) in the ground between a starting position and an end position by means of a system according to any one of Claims 12 to 14, comprising the following method steps:
- connecting the pipe to be laid (1) to the connection device (9) of the device before the device has reached the initial position or when the device is in the initial position;
- pulling the laying vehicle (13) in the laying direction (4) whilst simultaneously operating the drill head (7) and the conveyor device (8);
- detaching the tube (1) from the connection device (9) after the device has reached the end position.

## Revendications

1. Dispositif de pose de tuyaux (1) dans le sol, le dispositif comprenant :
- une lame de charrue (2) avec un sabot de lame (3), dans lequel le sabot de lame (3) présente au moins un élément de déplacement (5) dépassant en saillie dans une direction de pose (4),
- un foret (6), lequel foret (6) est relié au sabot de lame (2) et comprend au moins une tête de forage (7) disposée dans une section de logement de tête de forage (7a) d'un logement de foret ainsi qu'un dispositif convoyeur (8) disposé dans une section de logement de convoyeur (8a) du logement de foret pour l'enlèvement des déblais de forage sous la forme de la terre saisie par la tête de forage (7) sur la surface du sol, ainsi que
- un dispositif de raccordement (9) pour raccorder un tuyau (1) à poser au foret (6), dans lequel
- la lame de charrue (2) est disposée derrière le foret (6) lorsqu'elle est vue dans la direction de pose (4).

2. Dispositif selon la revendication 1, **caractérisé en ce que** la section de logement de convoyeur (8a) est disposée pour s'étendre transversalement à la direction de pose (4) afin de transporter les déblais de forage au-dessus du sol.

3. Dispositif selon la revendication 1 ou 2, **caractérisé en ce que** le foret (6) au moyen d'un élément d'accouplement (10) est relié avec la lame de charrue (2) est relié de sorte qu'un espace libre (11) subsiste entre l'élément d'accouplement (10) et la tête de forage (7).

4. Dispositif selon la revendication 3, **caractérisé en ce que** l'élément d'accouplement (10) au moins au niveau de la tête de forage (7), en particulier de la section de logement de tête de forage (7a), et au niveau du dispositif convoyeur (8), en particulier de la section de logement de convoyeur (8a), vient en prise avec le foret (6).

5. Dispositif selon une des revendications 1 à 4, **caractérisé en ce que** le foret (6) est relié à la lame de charrue (2) et/ou à l'élément d'accouplement (10) de manière pivotante horizontalement.

6. Dispositif selon une des revendications 1 à 5, **caractérisé en ce que** le foret (6) est relié à la lame de charrue (2) et/ou à l'élément d'accouplement (10) de manière pivotante verticalement.

7. Dispositif selon une des revendications 1 à 6, **caractérisé en ce que** l'élément de déplacement (5) est disposé de telle sorte que lorsque le dispositif est utilisé comme prévu, le sol est déplacé et/ou ameubli, avant d'être saisi par la tête de forage (7).

8. Dispositif selon une des revendications 1 à 7, **caractérisé en ce que** l'élément de déplacement (5) est disposé sensiblement à la même hauteur que la tête de forage (7).

9. Dispositif selon une des revendications 1 à 8, **caractérisé en ce que** le logement de foret comprend une section de logement élargie (12) avec une section transversale agrandie par rapport à la section de logement de tête de forage (7a), dans lequel la section de boîtier de tête de forage (7a) vue dans la direction de pose (4) est disposée derrière la section de logement élargie (12), dans lequel la section de logement élargie (12) se rattache de préférence directement à la section de logement de tête de forage (7a).

10. Dispositif selon la revendication 9, **caractérisé en ce que** le dispositif de raccordement (9) est disposé à l'intérieur de la section de logement élargie (12) ou sur une zone d'extrémité opposée à la tête de forage (7) de la section de logement élargie (12).

11. Dispositif selon une des revendications 1 à 10, **caractérisé en ce que** le sabot de lame (3) est maintenu de manière réglable dans son orientation sur le lame de charrue (2) .

12. Système comprenant un véhicule de pose (13) ainsi qu'un dispositif selon une des revendications 1 à 11, dans lequel la lame de charrue (2) du dispositif est reliée au véhicule de pose (13) ou fait partie du véhicule de pose (13).

13. Système selon la revendication 12, **caractérisé en ce que** le véhicule de pose (13) présente un dispositif de commande pour la commande au moins de l'orientation du sabot de lame (3) et/ou d'une vitesse de rotation de la tête de forage (7) et/ou d'une vitesse de transport du dispositif convoyeur (8).

14. Système selon la revendication 13, **caractérisé en ce que** le dispositif de commande est relié via des moyens de commande s'étendant dans la lame de charrue (2) avec le sabot de lame (3) et/ou la tête de forage (7) et/ou le dispositif convoyeur (8).

15. Procédé de pose d'un tuyau (1) dans le sol entre une position initiale et une position finale au moyen d'un système selon une des revendications 12 à 14, comprenant les étapes de procédé suivantes consistant à :
- raccorder le tuyau à poser (1) au dispositif de raccordement (9) du dispositif avant que le dispositif ait atteint la position initiale ou lorsque le dispositif est en position initiale ;
- tirer le véhicule de pose (13) dans la direction de pose (4) tout en actionnant la tête de forage (7) et le dispositif convoyeur (8) ;
- détacher le tuyau (1) du dispositif de raccordement (9) après que le dispositif a atteint la position finale.
